# FASCICULE DE BREVET EUROPEEN

(11) **EP 4 514 661 B1**
(45) Date de publication et mention de la délivrance du brevet: **25.02.2026**
(21) Numéro de dépôt: 23713719.5
(22) Date de dépôt: 09.03.2023
(51) Int. Cl.: B60R 13/07, B62D 35/02

(54) **PEAU DE PARE-CHOCS PERMETTANT L'ÉVACUATION DE LIQUIDE, POUR UN VÉHICULE TERRESTRE**
STOSSFÄNGERHAUT ZUR ENTFERNUNG VON FLÜSSIGKEIT ZUR VERWENDUNG AUF EINEM LANDFAHRZEUG
BUMPER SKIN FOR THE REMOVAL OF LIQUID FOR USE ON A LAND VEHICLE

(30) Priorité: 29.04.2022 FR 2204106
(43) Date de publication de la demande: 05.03.2025
(73) Titulaire: Stellantis Auto SAS, 78300 Poissy (FR)
(72) Inventeur: BOUDAN, Julien, 91210 DRAVEIL (FR); ROYER, Guillaume, 91680 BRUYERES LE CHATEL (FR); PERON, Rodolphe, 95220 HERBLAY SUR SEINE (FR)
(74) Mandataire: BCIP
(86) Numéro de dépôt international: PCT/FR2023/050319
(87) Numéro de publication internationale: WO 2023/209300

(56) Documents cités:
- CN-A- 113 859 162
- DE-A1- 102017 119 367
- JP-A- 2000 190 873
- JP-A- 2015 217 838

## Description

### Domaine technique de l'invention

La présente invention revendique la priorité de la demande française 2204106 déposée le 29 avril 2022.

L'invention concerne les véhicules terrestres, et plus précisément les pare-chocs (ou boucliers) de tels véhicules.

### Etat de la technique

Certains véhicules terrestres, généralement de type automobile, comprennent une structure à laquelle est solidarisé au moins un pare-chocs (ou bouclier).

Il est rappelé qu'un pare-chocs de véhicule terrestre comprend généralement une armature de pare-chocs, une éventuelle traverse inférieure de pare-chocs, et une peau de pare-chocs solidarisée fixement à l'armature de pare-chocs et à l'éventuelle traverse inférieure de pare-chocs et masquant notamment ces dernières.

Afin de réduire la consommation d'énergie des véhicules, il a été proposé de fixer sous leur soubassement un ou plusieurs écrans destinés à améliorer l'aérodynamisme, et notamment à empêcher des perturbations de la circulation de l'air par des éléments saillants.

Lorsqu'un tel écran s'étend jusqu'au niveau d'une partie inférieure (ou « jupe ») d'une peau de pare-chocs, il devient compliqué de solidariser fixement au soubassement la partie d'extrémité « transversale » de l'écran et la partie d'extrémité « transversale » de la partie inférieure de la peau de pare-chocs. Il a donc été proposé de solidariser fixement au soubassement la partie d'extrémité transversale de l'écran, puis de solidariser fixement la partie d'extrémité transversale de la partie inférieure de la peau de pare-chocs à la partie d'extrémité transversale de l'écran. Cependant, ce mode d'assemblage implique un recouvrement des deux parties d'extrémité transversales qui empêche qu'elles se prolongent mutuellement et donc induit localement une perturbation de la circulation de l'air. Le document JP 2015 217838 A divulgue un exemple de peau de pare-chocs propre à équiper un véhicule terrestre.

L'invention a donc notamment pour but d'améliorer la situation.

### Présentation de l'invention

Elle propose notamment à cet effet une peau de pare-chocs, d'une part, propre à équiper un véhicule terrestre comportant un soubassement masqué partiellement par un écran, et, d'autre part, comprenant une paroi inférieure inclinée et destinée à être solidarisée fixement à une partie d'extrémité de cet écran.

Cette peau de pare-chocs se caractérise par le fait que sa paroi inférieure comprend un premier bord prolongé par une sous-partie destinée à être installée dans une position redressée sous une zone au moins en partie redressée d'un second bord de la partie d'extrémité, et comportant, à une interface avec ce premier bord, au moins un passage permettant une évacuation par gravité de liquide s'écoulant sur une face interne de la paroi inférieure.

Grâce au logement de la sous-partie de la partie inférieure de la peau de pare-chocs en position redressée dans une zone au moins en partie redressée de l'écran, les partie inférieure et écran se prolongent mutuellement sans induire localement de perturbation de la circulation de l'air, et chaque passage permet que le liquide ne puisse pas s'accumuler au niveau de l'interface avec le premier bord du fait de la position redressée de la sous-partie.

La peau de pare-chocs selon l'invention peut comporter d'autres caractéristiques qui peuvent être prises séparément ou en combinaison, et notamment :
- la sous-partie peut comprendre N passages qui sont répartis sur son extension suivant une direction transversale du véhicule terrestre, avec N ≥ 2 ;
- la sous-partie peut être flexible de manière à pouvoir passer d'une position rabattue, avant assemblage de la peau de pare-chocs au véhicule terrestre, à une position redressée, pendant cet assemblage ;
- en présence de la dernière option, la flexibilité peut résulter d'un amincissement d'une épaisseur locale à l'interface avec le premier bord ;
- la sous-partie peut être propre à être solidarisée par vissage à la partie d'extrémité de l'écran.

L'invention propose également un pare-chocs destiné à équiper un véhicule terrestre et comprenant une armature de pare-chocs et une peau de pare-chocs du type de celle présentée ci-avant et solidarisée fixement à cette armature de pare-chocs

L'invention propose également un véhicule terrestre, éventuellement de type automobile, et comprenant un soubassement masqué partiellement par un écran et au moins un pare-chocs du type de celui présenté ci-avant et solidarisé fixement à cet écran.

Par exemple, ce véhicule terrestre peut comprendre une partie avant qui comporte le pare-chocs.

Egalement par exemple, l'écran peut assurer une fonction aérodynamique.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig.1] illustre schématiquement, dans une vue en perspective du côté de la face interne, une partie d'un exemple de réalisation d'une peau de pare-chocs selon l'invention, solidarisée à un écran d'un véhicule terrestre,
[Fig.2] illustre schématiquement, dans une vue en coupe dans un plan longitudinal et vertical, une petite partie des peau de pare-chocs et écran de la figure 1,
[Fig.3] illustre schématiquement, dans une vue en perspective du côté de la face externe et de dessous, une partie de la peau de pare-chocs de la figure 1 avant sa solidarisation à un écran d'un véhicule terrestre, et
[Fig.4] illustre schématiquement, dans une vue en perspective du côté de la face interne, la sous-partie de la paroi inférieure de la peau de pare-chocs de la figure 1, avant sa solidarisation.

### Description détaillée de l'invention

L'invention a notamment pour but de proposer une peau de pare-chocs PP destinée à équiper un véhicule terrestre, permettant une évacuation de liquide tout en étant inclinée, et dont la solidarisation à un écran EA, solidarisé à la face externe du soubassement de ce véhicule terrestre, ne perturbe pas la circulation de l'air.

Dans ce qui suit, on considère, à titre d'exemple non limitatif, que la peau de pare-chocs PP est destinée à faire partie d'un véhicule terrestre de type automobile, comme par exemple une voiture. Mais l'invention n'est pas limitée à ce type de véhicule terrestre. En effet, la peau de pare-chocs PP selon l'invention peut équiper n'importe quel véhicule terrestre comprenant une structure à laquelle sont solidarisés au moins une peau de pare-chocs et au moins un écran devant se prolonger mutuellement au moins partiellement.

Par ailleurs, on considère dans ce qui suit, à titre d'exemple non limitatif, que la peau de pare-chocs PP est destinée à faire partie de la partie avant (et plus précisément la façade avant) d'un véhicule terrestre (ici un véhicule automobile). Mais cela n'est pas obligatoire. En effet, une peau de pare-chocs PP selon l'invention pourrait faire partie d'une partie arrière d'un véhicule terrestre.

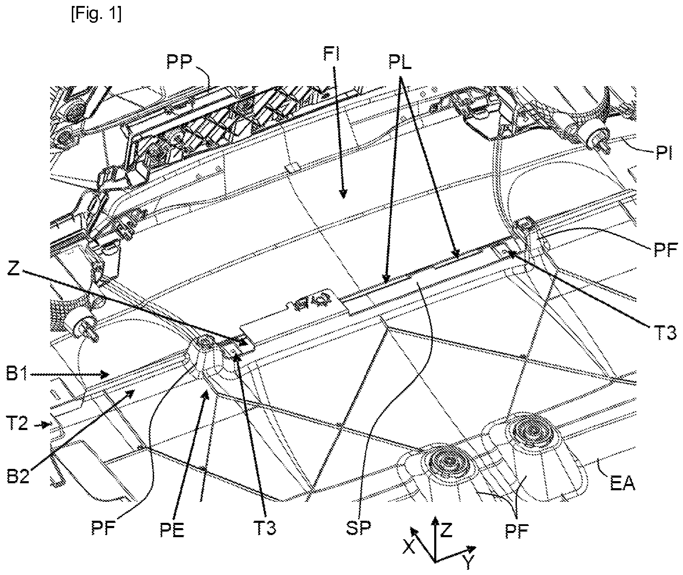

Sur les figures 1 à 4 la direction X est la direction longitudinale du véhicule, laquelle est parallèle aux côtés latéraux comportant les portières latérales, la direction Y est la direction transversale du véhicule, laquelle est perpendiculaire à la direction longitudinale X, et la direction Z est la direction verticale du véhicule, laquelle est perpendiculaire aux directions longitudinale X et transversale Y.

On a schématiquement illustré sur la figure 1 un exemple de réalisation d'une peau de pare-chocs PP selon l'invention, solidarisée à un exemple de réalisation d'un écran EA d'un véhicule terrestre.

Bien que cela n'apparaisse pas sur la figure 1, le véhicule terrestre comprend une structure à laquelle sont solidarisés la peau de pare-chocs PP et l'écran EA. Plus précisément, la structure comprend un soubassement auquel est solidarisé fixement l'écran EA, et la peau de pare-chocs PP est solidarisée fixement, notamment, à au moins une traverse de la façade avant (dont elle fait partie) et à une partie d'extrémité PE de cet écran EA. Comme illustré partiellement sur la figure 1, l'écran EA peut comprendre des plots (ou pattes) de fixation PF qui sont traversé(e)s par des vis assurant sa solidarisation fixe au soubassement.

Cet écran EA est destiné à masquer partiellement le soubassement. Par exemple, cet écran EA peut assurer une fonction aérodynamique, et dans ce cas il empêche des perturbations de la circulation de l'air sur la face externe FE par des éléments saillants du soubassement ou fixés sur ce dernier. Mais en variante ou en complément l'écran EA pourrait assurer une fonction de protection d'une partie du soubassement et d'équipement(s) solidarisé(s) à ce dernier.

La peau de pare-chocs PP, selon l'invention, est destinée à faire partie d'un pare-chocs d'un véhicule (terrestre) qui comprend par ailleurs une armature de pare-chocs et une éventuelle traverse inférieure de pare-chocs. Plus précisément, cette peau de pare-chocs est destinée à être solidarisée fixement à l'armature de pare-chocs et à l'éventuelle traverse inférieure de pare-chocs et à masquer notamment ces dernières.

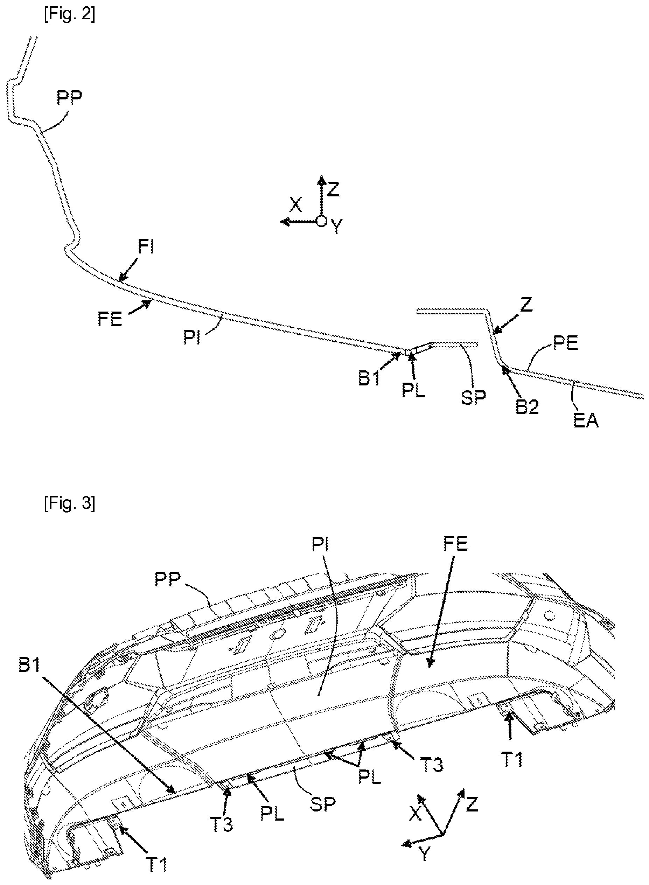

Comme illustré sur les figures 1 à 4, une peau de pare-chocs PP, selon l'invention, comprend une paroi avant qui est prolongée dans sa partie inférieure, et ici vers l'arrière du véhicule (terrestre), par une paroi inférieure PI qui est inclinée (ici vers le bas, de l'avant vers l'arrière) et destinée à être solidarisée fixement à la partie d'extrémité PE (ici avant) de l'écran EA. Cette solidarisation fixe peut se faire au moyen de vis traversant des premiers trous dédiés T1 définis dans le premier bord B1 et des seconds trous dédiés T2 définis dans le second bord B2 et éventuellement filetés. On notera que dans l'exemple illustré non limitativement sur la figure 3, le premier bord B1 comprend deux petites pattes de fixation dans lesquelles sont définis respectivement deux premiers trous dédiés T1 et qui sont au final placées respectivement dans deux petits logements définis par des décrochements du second bord B2 qui comprennent respectivement deux seconds trous dédiés T2.

Cette paroi inférieure PI comprend un premier bord B1 qui est prolongé (ici vers l'arrière suivant la direction longitudinale X) par une sous-partie SP destinée à être installée dans une position redressée sous une zone Z, au moins en partie redressée, d'un second bord B2 de la partie d'extrémité PE. Cette sous-partie SP comporte, à l'interface avec le premier bord B1, au moins un passage (ou trou traversant) PL qui permet l'évacuation par gravité de liquide s'écoulant sur une face interne FI de la paroi inférieure PI en raison de son inclinaison.

On comprendra que la définition d'une zone Z, au moins en partie redressée, dans le second bord B2 de l'écran EA permet avantageusement le logement de la sous-partie SP en position redressée, ce qui permet aux partie inférieure PI et écran EA de se prolonger mutuellement sans décrochement, et donc de ne pas induire localement une perturbation de la circulation de l'air. Quant à chaque passage (ou trou traversant) PL, il permet avantageusement que le liquide s'écoulant sur la face interne FI inclinée ne puisse pas s'accumuler au niveau de l'interface avec le premier bord B1 du fait de la position redressée de la sous-partie SP.

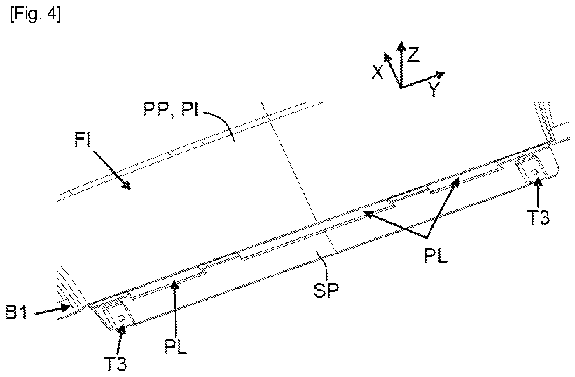

On notera, comme illustré non limitativement sur les figures 1, 3 et 4, que la sous-partie SP peut comprendre N passages PL répartis sur son extension suivant la direction transversale Y, avec N ≥ 2. Dans l'exemple illustré non limitativement sur les figures 3 et 4, la sous-partie SP comprend trois passages PL (N = 3). Mais elle pourrait n'en comporter que deux, ou bien en comporter plus de trois (par exemple quatre ou cinq). Le nombre N ne doit cependant pas être trop important si l'on veut que la sous-partie SP ne se détache pas progressivement de la partie inférieure PI du fait des chocs et vibrations.

On notera également qu'il est particulièrement avantageux que la sous-partie SP soit flexible de manière à pouvoir passer d'une position rabattue, avant l'assemblage de la peau de pare-chocs PP au véhicule, à une position redressée, pendant (et après) cet assemblage. Cela facilite en effet notablement le démoulage de la sous-partie SP, lorsque la peau de pare-chocs PP est réalisée au moyen d'un moule ayant une importante complexité. Le passage de la position rabattue à la position redressée est réalisé par le technicien qui est chargé de solidariser la peau de pare-chocs PP au véhicule, plus précisément lorsqu'il doit solidariser la partie inférieure PI de la peau de pare-chocs PP à la partie d'extrémité PE de l'écran EA.

Par exemple, la flexibilité de la sous-partie SP peut résulter d'un amincissement de l'épaisseur locale à l'interface avec le premier bord B1. Cet amincissement peut résulter de la forme du moule ou bien d'une opération effectuée par un technicien après le démoulage.

On notera également que la sous-partie SP est de préférence propre à être solidarisée par vissage à la partie d'extrémité PE de l'écran EA. Cette solidarisation peut se faire au moyen de vis traversant des troisièmes trous dédiés T3 définis dans la sous-partie SP et des quatrièmes trous dédiés définis dans la zone Z du second bord B2 et éventuellement filetés.

Mais dans une variante de réalisation la sous-partie SP pourrait être solidarisée par vissage au soubassement, ce qui est rendu possible lorsque la zone Z du second bord B2 présente une découpe (masquée de l'extérieur par la sous-partie SP), comme illustré sur la figure 1.

## Revendications

1. Peau de pare-chocs (PP) propre à équiper un véhicule terrestre comportant un soubassement masqué partiellement par un écran (EA), ladite peau de pare-chocs (PP) comprenant une paroi inférieure (PI) inclinée et destinée à être solidarisée fixement à une partie d'extrémité (PE) dudit écran (EA), **caractérisée en ce que** ladite paroi inférieure (PI) comprend un premier bord (B1) prolongé par une sous-partie (SP) destinée à être installée dans une position redressée sous une zone (Z) au moins en partie redressée d'un second bord (B2) de ladite partie d'extrémité (PE), et comportant, à une interface avec ledit premier bord (B1), au moins un passage (PL) permettant une évacuation par gravité de liquide s'écoulant sur une face interne (FI) de ladite paroi inférieure (PI).

2. Peau de pare-chocs selon la revendication 1, **caractérisée en ce que** ladite sous-partie (SP) comprend N passages (PL) répartis sur son extension suivant une direction transversale dudit véhicule terrestre, avec N ≥ 2.

3. Peau de pare-chocs selon la revendication 1 ou 2, **caractérisée en ce que** ladite sous-partie (SP) est flexible de manière à pouvoir passer d'une position rabattue, avant assemblage de ladite peau de pare-chocs (PP) audit véhicule terrestre, à une position redressée, pendant ledit assemblage.

4. Peau de pare-chocs selon la revendication 3, **caractérisée en ce que** ladite flexibilité résulte d'un amincissement d'une épaisseur locale à ladite interface avec le premier bord (B1).

5. Peau de pare-chocs selon l'une des revendications 1 à 4, **caractérisée en ce que** ladite sous-partie (SP) est propre à être solidarisée par vissage à ladite partie d'extrémité (PE) de l'écran (EA).

6. Pare-chocs destiné à équiper un véhicule terrestre et comprenant une armature de pare-chocs, **caractérisé en ce qu'**il comprend en outre une peau de pare-chocs (PP) selon l'une des revendications précédentes, solidarisée fixement à ladite armature de pare-chocs.

7. Véhicule terrestre comprenant un soubassement masqué partiellement par un écran (EA), **caractérisé en ce qu'**il comprend au moins un pare-chocs selon revendication précédente solidarisé fixement audit écran (EA).

8. Véhicule terrestre selon la revendication 7, **caractérisé en ce qu'**il comprend une partie avant comportant ledit pare-chocs.

9. Véhicule terrestre selon la revendication 7 ou 8, **caractérisé en ce que** ledit écran (EA) assure une fonction aérodynamique.

10. Véhicule terrestre selon l'une des revendications 7 à 9, **caractérisé en ce qu'**il est de type automobile.

## Patentansprüche

1. Stoßstangenhaut (PP), geeignet zur Ausrüstung eines Landfahrzeugs mit einem teilweise durch eine Abschirmung (EA) maskierten Unterbau, wobei die Stoßstangenhaut (PP) eine geneigte untere Wand (PI) aufweist, die dazu bestimmt ist, fest mit einem Endabschnitt (PE) der Abschirmung (EA) verbunden zu werden, **dadurch gekennzeichnet, dass** die untere Wand (PI) einen ersten Rand (B1) aufweist, der durch einen Unterabschnitt (SP) verlängert ist, der dazu bestimmt ist, in einer aufgerichteten Position unter einem Bereich (Z) installiert zu werden, der wenigstens teilweise aufgerichtet ist von einem zweiten Rand (B2) des Endabschnitts (PE), und an einer Schnittstelle mit der ersten Kante (B1) mindestens einen Durchgang (PL), der eine Schwerkraftableitung von Flüssigkeit ermöglicht, die auf einer Innenseite (FI) der unteren Wand (PI) fließt.

2. Stoßfängerhaut nach Anspruch 1, **dadurch gekennzeichnet, dass** der Unterteil (SP) N Durchlässe (PL) umfasst, die entlang seiner Erstreckung in einer Querrichtung des Landfahrzeugs mit N ≥ 2 verteilt sind.

3. Stoßstangenhaut nach Anspruch 1 oder 2, **dadurch gekennzeichnet, dass** der Unterteil (SP) flexibel ist, sodass er sich während der Montage von der zusammengeklappten Position vor dem Zusammenbau der Stoßstangenhaut (PP) mit dem Landfahrzeug in eine aufrechte Position bewegen kann.

4. Stoßstangenhaut nach Anspruch 3, **dadurch gekennzeichnet, dass** die Flexibilität durch eine Verdünnung einer lokalen Dicke an der Grenzfläche mit dem ersten Rand (B1) entsteht.

5. Stoßfängerhaut nach einem der Ansprüche 1 bis 4, **dadurch gekennzeichnet, dass** der Unterteil (SP) geeignet ist, durch Verschrauben mit dem Endteil (PE) des Schirms (EA) verbunden zu werden.

6. Stoßstange zur Ausrüstung eines Landfahrzeugs, die eine Stoßstangenarmatur umfasst, **dadurch gekennzeichnet, dass** sie außerdem eine Stoßstangenhaut (PP) nach einem der vorhergehenden Ansprüche umfasst, die fest mit der Stoßstangenarmatur verbunden ist.

7. Landfahrzeug mit einem Unterbau, der teilweise durch eine Abschirmung (EA) verdeckt ist, **dadurch gekennzeichnet, dass** es mindestens einen Stoßfänger nach dem vorhergehenden Anspruch umfasst, der fest mit der Abschirmung (EA) verbunden ist.

8. Landfahrzeug nach Anspruch 7, **dadurch gekennzeichnet, dass** es einen vorderen Teil mit dem Stoßfänger aufweist.

9. Landfahrzeug nach Anspruch 7 oder 8, **dadurch gekennzeichnet, dass** die Abschirmung (EA) eine aerodynamische Funktion ausführt.

10. Landfahrzeug nach einem der Ansprüche 7 bis 9, **dadurch gekennzeichnet, dass** es ein Kraftfahrzeug ist.

## Claims

1. Bumper skin (PP) suitable for equipping a land vehicle comprising a base partially concealed by a screen (EA), said bumper skin (PP) comprising an inclined lower wall (PI) and intended to be fixedly attached to an end part (PE) of said screen (EA), wherein said lower wall (PI) comprises a first edge (B 1) extended by a sub-part (SP) intended to be installed in a position straightened under a zone (Z) at least partially straightened from a second edge (B 2) of said end part (PE), and comprising, at an interface with said first edge (B 1), at least one passage (PL) allowing evacuation by gravity of liquid flowing on an internal face (FI) of said lower wall (PI).

2. Bumper skin according to claim 1, wherein said sub-part (SP) comprises N passages (PL) distributed over its extension along a transverse management of said land vehicle, with N≧2.

3. Bumper skin according to claim 1 or 2, wherein said sub-part (SP) is flexible so as to be able to pass from a folded position, before assembling said bumper skin (PP) to said land vehicle, to a straightened position, during said assembling.

4. Bumper skin according to claim 3, **characterised in that** said flexibility results from a thinning of a local thickness at said interface with the first edge (B 1).

5. Bumper skin according to one of Claims 1 to 4, **characterised in that** said sub-part (SP) is capable of being secured by screwing to said end part (PE) of the screen (EA).

6. Bumper intended to be fitted to a land vehicle and comprising a bumper reinforcement, **characterised in that** it further comprises a bumper skin (PP) according to one of the previous claims, fixedly attached to said bumper reinforcement.

7. Ground vehicle comprising a base partially concealed by a screen (EA), wherein it comprises at least one bumper according to claim previous secured to said screen (EA).

8. Land vehicle according to claim 7, **characterised in that** it comprises a front part comprising said bumper.

9. Land vehicle according to claim 7 or 8, **characterised in that** said screen (EA) performs an aerodynamic function.

10. Land vehicle according to one of Claims 7 to 9, **characterised in that** it is of the automobile type.
